(19) **Europäisches Patentamt / European Patent Office / Office européen des brevets**

(11) **EP 4 024 221 B1**

(12) **FASCICULE DE BREVET EUROPEEN**

(45) Date de publication et mention de la délivrance du brevet:
**15.05.2024 Bulletin 2024/20**

(21) Numéro de dépôt: **21217345.4**

(22) Date de dépôt: **23.12.2021**

(51) Classification Internationale des Brevets (IPC):
**G06F 12/02** *(2006.01)* **G06F 12/08** *(2016.01)*

(52) Classification Coopérative des Brevets (CPC):
**G06F 12/08; G06F 12/0238;** G06F 2212/1044;
G06F 2212/401; G06F 2212/7202

(54) **PROCÉDÉ D'AUGMENTATION DU NOMBRE D'APPLICATIONS DANS UN DISPOSITIF À MÉMOIRE LIMITÉE**

VERFAHREN ZUR ERHÖHUNG DER ANZAHL VON ANWENDUNGEN IN EINER VORRICHTUNG MIT BEGRENZTEM SPEICHER

METHOD FOR INCREASING THE NUMBER OF APPLICATIONS IN A LIMITED MEMORY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2020 FR 2014213**

(43) Date de publication de la demande:
**06.07.2022 Bulletin 2022/27**

(73) Titulaire: **STMicroelectronics (Grand Ouest) SAS 72100 Le Mans (FR)**

(72) Inventeur: **DARCEL, Frederic 35000 RENNES (FR)**

(74) Mandataire: **Cabinet Beaumont 4, Place Robert Schuman B.P. 1529 38025 Grenoble Cedex 1 (FR)**

(56) Documents cités:
**US-A1- 2013 326 170 US-A1- 2016 124 659 US-A1- 2017 371 595**

**Description**

Domaine technique

La présente description concerne le domaine des dispositifs électroniques, et en particulier un procédé pour le stockage d'une ou plusieurs applications dans la mémoire d'un dispositif électronique.

Technique antérieure

Les fonctionnalités des cartes à puce ou d'autres dispositifs électroniques à circuit intégré sont souvent assurées par des programmes d'ordinateur, ou par des applications, installées dans une mémoire du dispositif. Ces applications sont généralement chargées avec le système d'exploitation lors de l'installation de l'image logicielle du système. Il peut être souhaitable dans certains cas de stocker ou charger, lors de la fabrication ou production du dispositif, plusieurs applications dans la mémoire afin d'offrir à un revendeur ou à un utilisateur final le choix d'installer ou activer une ou plusieurs applications selon l'utilisation prévue, que ce soit en monétique, en identification, en téléphonie, etc.

Cependant, la mémoire disponible sur ces dispositifs reste limitée en taille, et charger un grand nombre d'applications sur le dispositif lors de la fabrication pose donc un problème technique.

US 2017/371595 A1 décrit un système comprenant des circuits intégrés et une mémoire flash. Cette mémoire comprends une pluralité d'applications qui se réfèrent à des objets compressés. La décompression des objets dépendants se produit avant que l'environnement d'exécution d'application ne charge les objets dépendants sous forme non compressée à partir de la mémoire flash.

Résumé de l'invention

Il existe un besoin pour un procédé et un dispositif qui pallient tout ou partie des inconvénients des solutions connues. La présente invention est définie par les revendications indépendantes jointes auxquelles il convient de se référer.

Un mode de réalisation prévoit un procédé comprenant :

- la réception, par un dispositif, d'une commande de sélection d'une première application parmi une pluralité d'applications compressées stockées dans une mémoire non volatile du dispositif, la première application étant stockée dans un premier emplacement ; et
- la décompression par le dispositif de la première application, et le stockage de la première application décompressée dans la mémoire au moins partiellement :

  dans le premier emplacement ; et
  dans un deuxième emplacement de stockage d'une deuxième application compressée parmi la pluralité d'applications, la première application décompressée écrasant au moins une partie de la deuxième application compressée.

Selon un mode de réalisation, la première application compressée comprend une pluralité de tronçons stockés à des adresses mémoire consécutives du premier emplacement, et la décompression de la première application comprend :

- la décompression d'un premier tronçon situé au moins partiellement à une adresse voisine de l'emplacement de la deuxième application compressée ;
- le stockage du premier tronçon décompressé au moins partiellement dans l'emplacement de la deuxième application compressée ;
- la décompression d'un deuxième tronçon de la première application situé au moins partiellement à l'adresse voisine du premier tronçon compressé de la première application ; et
- le stockage du deuxième tronçon décompressé de la première application sur au moins une adresse voisine du premier tronçon décompressé.

Selon un mode de réalisation, la commande de sélection de la première application à décompresser contient des instructions pour la décompression d'un sous-ensemble de la pluralité d'applications, la taille du sous-ensemble d'applications décompressées étant au plus égale à la taille de la mémoire dans laquelle la pluralité d'applications compressées est stockée.

Selon un mode de réalisation, les applications du sous-ensemble d'applications sélectionné par la commande de sélection sont décompressées en suivant l'ordre dans lequel elles sont stockées dans la mémoire non volatile du dispositif.

Selon un mode de réalisation, chaque application compressée du sous-ensemble d'applications sélectionné est stockée au moins partiellement à une adresse voisine d'une application compressée n'appartenant pas au sous-ensemble.

Selon un mode de réalisation, le procédé comprend :

- la réception par le dispositif d'une autre commande de sélection comprenant des instructions pour la décompression d'un autre sous-ensemble de la pluralité d'applications ; et
- la génération d'un signal d'alerte par le dispositif, le signal d'alerte indiquant que la décompression de l'autre sous-ensemble n'est pas permise.

Selon un mode de réalisation, le procédé comprend, avant la réception de la commande de sélection, le stockage de la pluralité d'applications compressées dans la mémoire non volatile par un dispositif de programmation, la commande de sélection étant transmise par un dispositif de sélection.

Un mode de réalisation prévoit un dispositif comprenant :

- une mémoire non volatile ; et
- un dispositif de traitement de données agencé pour :

  - réceptionner une commande de sélection d'une première application parmi une pluralité d'applications compressées stockées dans la mémoire non volatile, la première application étant stockée dans un premier emplacement ; et
  - décompresser la première application, et stocker la première application décompressée dans la mémoire au moins partiellement dans le premier emplacement et dans un deuxième emplacement de stockage d'une deuxième application compressée parmi la pluralité d'applications.

Selon un mode de réalisation, la mémoire non volatile est d'une taille ne permettant pas la décompression de la pluralité d'applications.

Un mode de réalisation prévoit une carte à circuit intégré comprenant le dispositif décrit.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente de manière schématique un exemple d'un dispositif électronique ;

la figure 2A est un organigramme présentant des opérations d'un procédé d'installation d'applications dans un dispositif électronique selon un exemple de réalisation de la présente description ;

la figure 2B illustre une opération de compression d'une pluralité d'applications selon un mode de réalisation de la présente description ;

la figure 2C illustre une opération de décompression de plusieurs applications selon un mode de réalisation de la présente description ;

la figure 3 représente de manière schématique un système comprenant un dispositif électronique et un dispositif de programmation ;

la figure 4 est un organigramme représentant des opérations d'un procédé de chargement d'applications compressées dans un dispositif électronique selon un exemple de réalisation de la présente description ;

la figure 5 illustre un exemple du procédé de décompression d'une application selon deux exemples de sélection ;

la figure 6 illustre plus en détail le procédé de décompression d'une application selon l'un des exemples de sélection de la figure 5 ;

la figure 7 représente de manière schématique un système comprenant un dispositif électronique et un dispositif de sélection selon un mode de réalisation de la présente description ; et

la figure 8 est un organigramme représentant des opérations d'un procédé de décompression selon un exemple de réalisation de la présente description.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les différents algorithmes de compression et de décompression pouvant être utilisés n'ont pas été détaillés, les modes de réalisation et les modes de mise en oeuvre décrits étant compatibles avec les algorithmes usuels de compression et de décompression d'applications.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

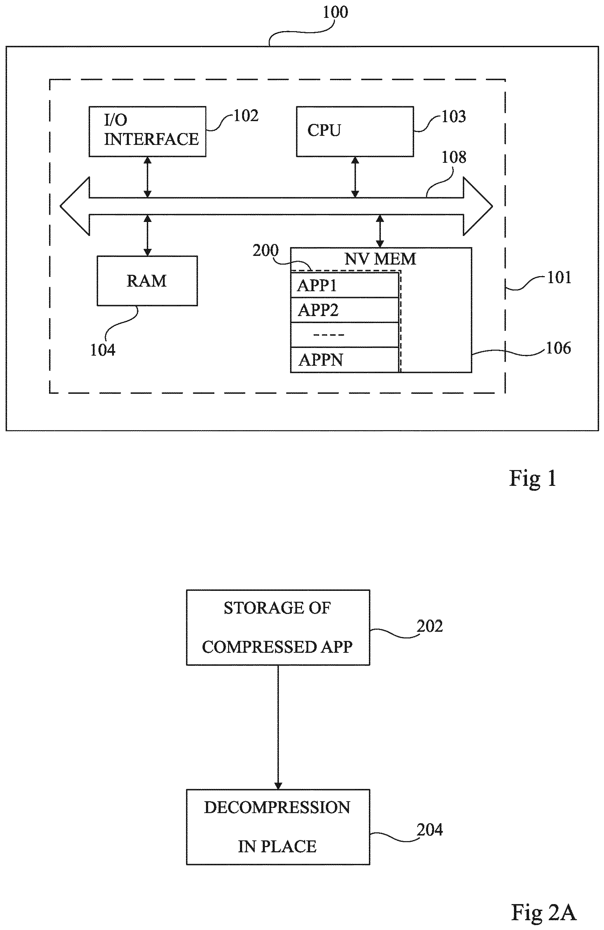

La figure 1 représente de manière schématique un exemple d'un dispositif électronique 100 comprenant un circuit intégré 101. Dans certains modes de réalisation, ce dispositif 100 est une carte à circuit intégré, telle qu'une carte bancaire, une carte d'identification, ou une carte SIM (de l'anglais « subscriber identity/identification module ») d'un téléphone mobile. Dans d'autre modes de réalisation, ce dispositif 100 est un dispositif connecté, tel que, par exemple, une montre connectée, qui dispose par exemple d'une application de paiement par technologie de communication en champ proche (NFC, de l'anglais « Near-Field Communication »).

Le circuit intégré 101 comprend, par exemple, au moins une interface d'entrée/sortie (I/O INTERFACE) 102, comprenant par exemple une interface à contact (filaire) et/ou une interface sans contact. Par exemple, l'interface 102 comprend une interface de communication en champ proche, telle qu'une interface NFC. L'interface 102 est par exemple reliée par l'intermédiaire d'un bus 108 à un processeur (CPU) 103, à une mémoire (RAM) 104, qui est par exemple une mémoire à accès aléatoire, et à une mémoire non volatile (NV MEM) 106, qui est par exemple une mémoire FLASH. La mémoire non volatile 106 contient, au moins en partie, des applications APP 1 à APP N, stockées sur un espace 200 de la mémoire, où N est le nombre d'applications. Par exemple, N est un entier compris entre deux et plusieurs dizaines, et de préférence entre 4 et 10. Ces applications ont été chargées lors de la fabrication du circuit 101.

Les applications APP 1 à APP N correspondent par exemple à des applications qui ne sont pas encore installées dans le circuit intégré 101, mais qui sont prêtes à être installées lors d'une opération de personnalisation du dispositif 100. Cette opération est par exemple mise en oeuvre par une entité intermédiaire, par exemple un revendeur, avant l'acquisition du dispositif par son utilisateur final. Dans cette opération, seules des applications correspondant à l'utilisation à laquelle est destiné le dispositif sont par exemple installées. Bien qu'il soit possible que la mémoire non volatile 106 soit vide d'applications avant l'opération de personnalisation, et que les applications souhaitées ne soient chargées que lors de cette opération de personnalisation, il y a des avantages à effectuer le chargement des applications au moment de la fabrication. En effet, pour des raisons de sécurité, il peut être souhaitable que le chargement soit fait par le fabricant du dispositif. De plus, le fabricant peut également s'assurer que la ou les applications à installer sont compatibles avec le système d'exploitation.

Les applications APP 1 à APP N ne sont pas destinées à être toutes installées ou activées lors de l'opération de personnalisation du dispositif. Le sous-ensemble d'applications installées dépend par exemple de l'usage final du dispositif. La mémoire disponible sur ces dispositifs reste cependant limitée, et charger un grand nombre d'applications dans le dispositif lors de la fabrication du circuit intégré 101, afin de rester flexible par rapport à l'usage final du dispositif 100, pose donc un problème technique.

Le dispositif 100 représenté dans la figure 1 est un exemple et peut bien sûr contenir d'autres composants que ceux illustré dans la figure 1, comme par exemple d'autres circuits intégrés que le circuit 101 et pouvant également inclure chacun un processeur. Selon un autre exemple, le dispositif 100 comporte également une interface utilisateur (non représentée). Par ailleurs, le circuit 101 peut contenir d'autres éléments comme par exemple un contrôleur d'accès direct à la mémoire (DMA - de l'anglais "Direct Memory Access") .

La figure 2A est un organigramme représentant des opérations d'un procédé d'installation d'applications dans un dispositif électronique selon un exemple de réalisation de la présente description.

Dans une opération 202 (STORAGE OF COMPRESSED APP), une pluralité d'applications compressées est stockée dans l'espace 200 (figure 1) de la mémoire 106.

Selon un mode de réalisation, la compression de la pluralité d'applications est faite en dehors du circuit intégré 101, par exemple sur un dispositif informatique, tel qu'un ordinateur, externe au circuit intégré. Une fois que l'opération de compression a été effectuée, la pluralité d'applications compressées est chargée pour être stockée par exemple dans l'espace 200 de la mémoire 106.

Selon un autre mode de réalisation, la compression de la pluralité d'applications est effectuée directement par le circuit intégré 101. Par exemple, les applications sont chargées une à une dans le circuit intégré 101, qui réalise lui-même, via le processeur 103, la compression des applications une à une, et les stocke, toujours une à une, dans la mémoire 106.

Dans une opération 204 (DECOMPRESSION IN PLACE), un sous-ensemble sélectionné d'applications est décompressé, par exemple par une entité intermédiaire lors de la personnalisation du dispositif 100. Cette décompression "en place" correspond à faire effectuer la décompression par le processeur 103 avec l'aide de la mémoire 104 à partir de commandes provenant de l'extérieur du circuit via une interface d'entrée/sortie.

Selon un autre mode de réalisation, l'exécution de la décompression des applications se fait en passant par la mémoire 104. Cependant, la taille de la mémoire 104 du circuit intégré 101 étant en général limitée, il conviendra alors d'effectuer la décompression de chaque application tronçon par tronçon. Autrement dit, on copiera tout d'abord un premier tronçon d'une première application à décompresser dans la mémoire 104, on effectuera la décompression de ce premier tronçon puis on le recopiera dans la mémoire 106 avant de faire de même avec un second tronçon de cette première application, etc.

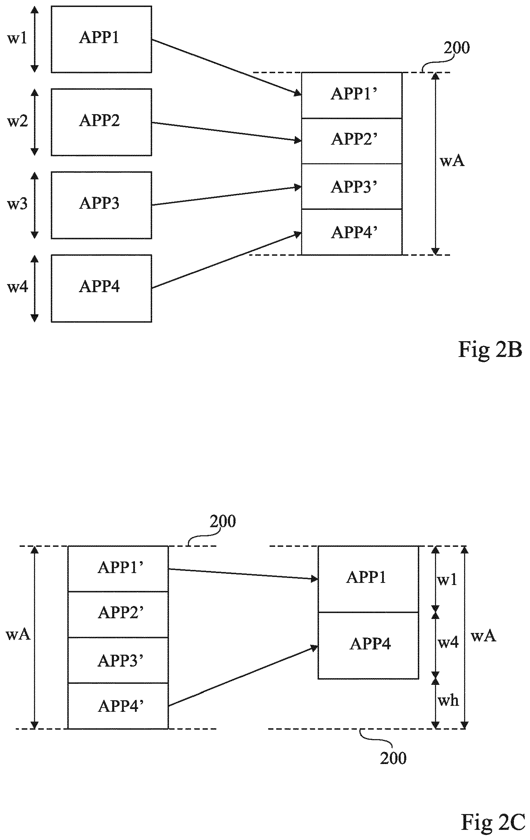

La figure 2B illustre un exemple de l'opération de compression 202 d'une pluralité d'applications de la figure 2A. L'espace de stockage 200 est de taille wA, comprise par exemple entre quelques kilo-octets et quelques dizaines de méga-octets. L'espace de stockage 200 représente par exemple l'intégralité, ou une partie réservée au stockage des applications, de l'espace de stockage total de la mémoire non volatile 106. Chaque application est stockée par exemple dans ou à des adresses mémoire consécutives de l'espace 200. La figure 2B illustre un exemple de quatre applications : APP1 à APP4 respectivement de taille w1 à w4, qui sont destinées à être stockées dans l'espace 200. Les tailles des quatre applications sont par exemple telles que :

[Math 1]

$$w1 + w2 + w3 + w4 \geq wA,$$

ce qui ne permet pas de charger les quatre applications en l'état dans l'espace 200. Néanmoins, en les compressant selon un taux de compression adapté, par exemple un taux de compression compris entre 30 et 40 %, leur stockage dans l'espace de stockage 200 devient possible. La somme des tailles des applications compressées APP1' à APP4', correspondant respectivement aux applications APP1 à APP4 après compression, est égale, dans cet exemple, à la taille wA de l'espace de stockage 200. Dans d'autres cas, la somme des tailles des applications compressées est inférieure à la taille wA. Par exemple, le taux de compression est choisi de manière qu'un nombre souhaité d'applications puissent être stockées en version compressées dans l'espace 200 sans que, toutefois, elles soient altérées après décompression.

La figure 2C illustre un exemple de l'opération de décompression 204 de la figure 2A. Cette opération est effectuée, par exemple, une fois la pluralité d'applications compressées chargée dans l'espace 200 et, par exemple, lors d'une opération de personnalisation du dispositif, en dehors des environnements sécurisés de la phase de production ou fabrication.

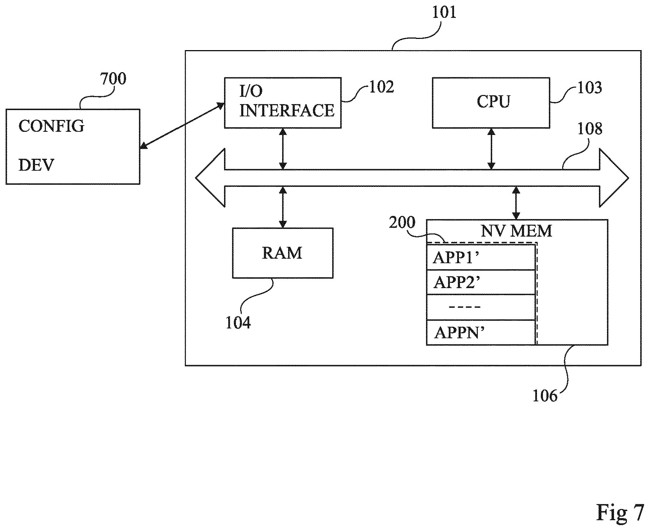

Selon un mode de réalisation, une commande de sélection présentée ultérieurement en relation avec la figure 7 va permettre de choisir un sous-ensemble d'applications, parmi la pluralité d'applications compressées dans l'espace 200, à décompresser.

Les adresses de l'espace 200 sont par exemple continues, impliquant que les adresses mémoire de l'espace 200 auxquelles la pluralité d'applications compressées est chargée sont consécutives et que chaque application compressée est stockée dans des adresses mémoire consécutives.

Selon un mode de réalisation, les applications compressées sont stockées dans l'espace 200 de sorte que chaque application à décompresser est stockée à des adresses mémoire voisines d'au moins une application compressée qui ne sera pas décompressée. Par exemple, les applications à décompresser comprennent une pluralité de sous-ensembles d'application disponibles pour installation, et une commande de sélection (décrite ci-après en relation avec la figure 7) permet de choisir l'un des sous-ensembles d'applications à décompresser. Chacune des applications compressées dans chaque sous-ensemble est, par exemple, stockée à des adresses mémoire voisines d'au moins une application compressée d'un autre sous-ensemble. Dans l'exemple illustré par la figure 2C, les applications APP1' et APP4' sont sélectionnées pour la décompression.

Selon un mode de réalisation, la décompression du sous-ensemble d'applications compressées se fait par ordre de stockage croissant. Dans l'exemple de la figure 2C, l'application APP1' est stockée dans les premières adresses mémoire de l'espace 200 et est donc décompressée avant l'application APP4'. Dans un premier temps, l'application APP1' est décompressée, par exemple par une exécution « en place », dans les adresses mémoire qu'elle occupe et au moins partiellement dans au moins une partie des adresses mémoire de l'application compressées APP2'. Selon un mode de réalisation, l'application APP1, une fois décompressée, est stockée dans les premières adresses mémoire consécutives de l'espace de stockage 200. Dans un second temps, l'application APP4' est décompressée, par exemple par une exécution « en place », dans les adresses mémoire voisines de l'application APP1 décompressée. Autrement dit, l'application APP4' est décompressée dans des adresses mémoire de l'application APP2' et/ou APP3' selon la place occupée par l'application APP1.

Dans l'exemple de la figure 2C, il serait également possible de décompresser en premier l'application APP4'. L'application APP4 serait alors stockée, par exemple, aux dernières adresses de l'espace 200 et l'application APP1' serait ensuite décompressée et stockée aux adresses précédant l'application APP4.

Dans l'exemple illustré par la figure 2C, la taille des deux applications décompressées APP1 et APP4 est plus petite que la taille wA de l'espace 200, et une région mémoire de taille wR est laissée vacante par les applications APP1 et APP4 :

[Math 2]

$$w1 + w4 < wA \ \ et \ \ wA - (w1 + w4) = wR.$$

L'espace non occupé par des applications non décompressées (de taille wR sur l'exemple de la figure 2C) peut être conservé en l'état, c'est-à-dire occupé par au moins une partie d'au moins une application compressée, être écrasé par une autre application, ou être considéré comme disponible pour être affecté à un autre besoin non nécessairement lié à une application. Dans l'exemple de la figure 2C, cet espace est occupé par une partie de l'application APP4' qui n'est pas exécutable en l'état.

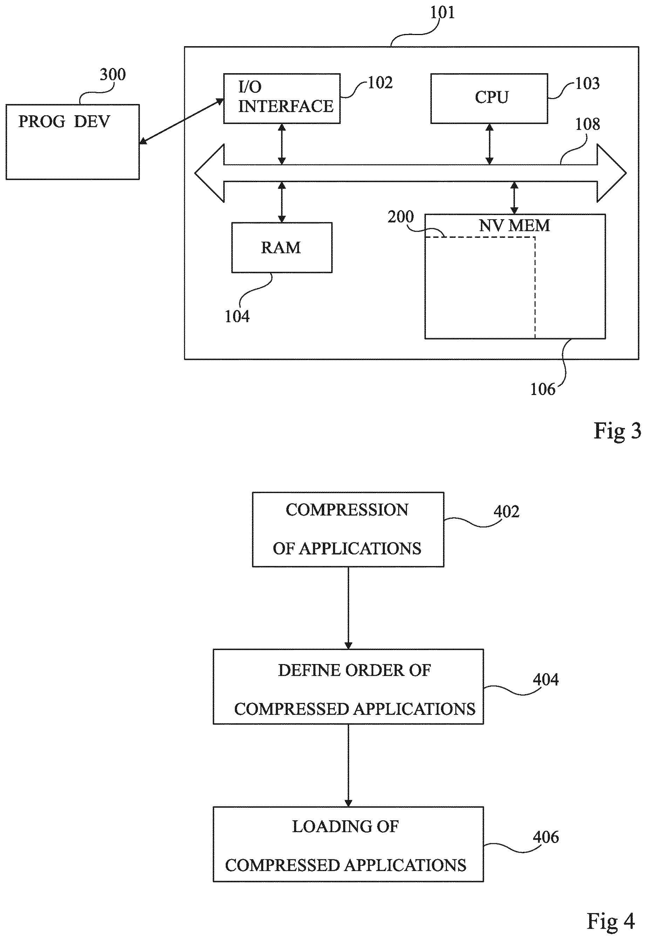

La figure 3 représente un système comprenant le dispositif à circuit intégré 100 et un dispositif de programmation (PROG DEV) 300. Le dispositif de programmation 300 est configuré pour mettre en oeuvre l'opération 202 de la figure 2A, dans laquelle la pluralité d'applications compressées est stockée dans l'espace 200 de la mémoire 106.

Ce chargement est effectué, par exemple, dans un environnement sécurisé. De plus, le chargement est par exemple effectué pendant la fabrication du circuit intégré 101, permettant au fabricant d'assurer, entre autres, la compatibilité des applications avec le système d'exploitation de la puce.

Par exemple, le dispositif 300 est un ordinateur que l'on relie par voie filaire à des plots de connexion de l'interface d'entrée/sortie 102 du circuit intégré 101. Dans un autre exemple, le dispositif 300 se connecte au dispositif 100 (figure 1) par le biais d'une communication en champ proche (NFC), l'interface 102 comportant dans ce cas au moins une antenne et le dispositif 300 étant un lecteur permettant la transmission en champ proche de la pluralité d'applications compressées.

Dans le cas où la pluralité d'applications a été compressée au préalable, elle est stockée directement dans l'espace de stockage 200. Dans le cas où la pluralité d'applications n'est pas compressée, la compression est par exemple exécutée par le processeur 103 avant le stockage dans l'espace 200.

La figure 4 est un organigramme représentant des opérations d'un procédé de chargement d'applications compressées dans un dispositif électronique selon un exemple de réalisation de la présente description.

À une étape 402 (COMPRESSION OF APPLICATIONS), la pluralité d'applications est compressée. Cette opération peut être exécutée directement par le circuit intégré 101 lui-même. Cette opération peut également être effectuée au préalable sur un dispositif de programmation distinct. Dans certains cas, il est possible que la pluralité d'applications compressées soit également cryptée.

À une étape 404 (DEFINE ORDER OF COMPRESSED APPLICATIONS), l'ordre de stockage des applications dans l'espace 200 est choisi afin de faciliter la décompression dans le dispositif 101. Par exemple, plusieurs sous-ensembles d'applications sont définis, chaque sous-ensemble étant pertinent pour une utilisation finale du dispositif 100. L'ordre des applications est par exemple sélectionné de sorte que, pour chaque sous-ensemble donné, chaque application compressée du sous-ensemble soit située sur des adresses voisines d'au moins une application d'un autre sous-ensemble d'applications qui ne seront pas décompressées.

À une étape 406 (LOADING OF COMPRESSED APPLICATIONS), la pluralité d'applications est stockée dans l'espace 200 et selon l'ordre défini à l'étape 404.

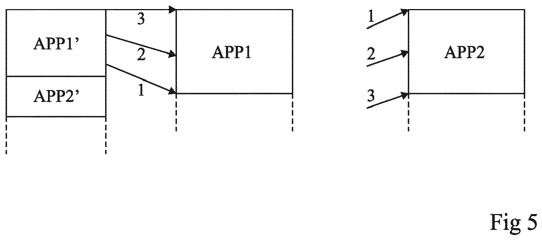

La figure 5 illustre un exemple du procédé de décompression d'une application selon deux exemples de sélection.

Pour chaque application sélectionnée pour être décompressée, la décompression s'effectue, par exemple, par tronçons. Un tronçon est une partie de l'application stocké dans une ou plusieurs adresses mémoire consécutives. Par exemple, un tronçon a une taille fixe, correspondant à la taille d'une ou plusieurs adresses mémoire, chaque adresse mémoire ayant la taille d'un mot d'un ou plusieurs octets. Dans un exemple, une application occupant six adresses mémoire consécutives peut être divisée en trois tronçons, chacun occupant deux adresses mémoire consécutives. Les applications n'étant pas toutes de même taille, le nombre de tronçons par application peut ne pas être constant. De même, il est possible de faire varier la taille des tronçons au sein d'une même application et/ou selon les applications.

La figure 5 illustre deux applications compressées : une application APP1' stockée aux premières adresses mémoire de l'espace 200 et une application APP2' stockée directement à la suite de l'application APP1'. Chaque application est divisée en trois tronçons (non illustrés sur la figure 5).

A gauche de la figure 5 est illustrée la décompression de l'application APP1' au moins partiellement dans les adresses mémoire occupées par l'application APP2'. La décompression se fait de « bas en haut », c'est-à-dire que le troisième et dernier tronçon, stocké dans les dernières adresses de l'application APP1', est décompressé en premier. Cette décompression est effectuée au moins partiellement sur des adresses occupées par l'application APP2' et sans empiéter dans des adresses mémoire occupées par les deux premiers tronçons de l'application APP1'. Ensuite, le deuxième tronçon, occupant les adresses mémoire précédant le dernier tronçon avant décompression est décompressé et est stocké dans les adresses mémoire précédant directement le troisième tronçon décompressé. Enfin, le premier tronçon est décompressé, de la même manière que les deux autres. La taille de l'application APP1 après décompression étant connue avant l'opération de décompression, cette opération est effectuée de sorte qu'il reste suffisamment d'espace pour le stockage du premier tronçon décompressé. Dans certains cas, la première adresse mémoire de l'application APP1 est la première adresse mémoire de l'espace 200.

A droite de la figure 5 est illustrée la décompression de l'application APP2' au moins partiellement dans les adresses mémoire de l'application APP1'. La décompression se fait de « haut en bas », c'est-à-dire que le premier tronçon stocké dans les premières adresses de l'application APP1' va être décompressé en premier. Cette décompression est effectuée sur les premières adresses occupées par l'application APP1' et sans empiéter sur des adresses mémoire occupées par les deux autres tronçons de l'application APP2'. Ensuite, le deuxième tronçon, occupant les adresses mémoire suivant le premier tronçon avant décompression est décompressé et est stocké sur les adresses mémoire suivant directement le troisième tronçon décompressé. Enfin, le dernier tronçon est décompressé, de la même manière que les deux autres.

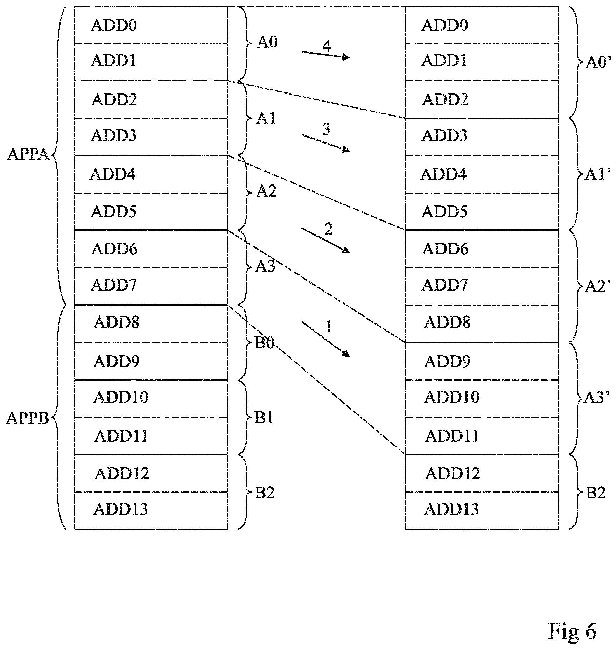

La figure 6 illustre plus en détail un exemple de décompression de « bas en haut ». L'exemple de la figure 6 présente une première application APPA et une deuxième application APPB. Ces deux applications sont compressées et chargées sur les adresses consécutives ADD0 à ADD13 de l'espace 200.

L'application APPA est composée de quatre tronçons A0, A1, A2 et A3 et chaque tronçon occupe deux adresses mémoire consécutives, autrement dit, le premier tronçon A0 occupe les adresses ADD0 et ADD1, le second tronçon A1 occupe les adresses ADD2 et ADD3, et ainsi de suite. L'application APPA est donc stockée aux adresses ADD0 à ADD7. L'application APPB est composée de trois tronçons B0, B1 et B2 occupant chacun deux adresses mémoire. Les tronçons B0, B1 et B2 sont stockés aux adresses ADD8 à ADD13, chaque tronçon occupant deux adresses mémoire.

Dans l'exemple de la figure 6, l'application APPB n'est pas décompressée, et l'application APPA est décompressée et stockée, au moins en partie, dans les adresses mémoire occupées par au moins une partie des tronçons constituant l'application APPB. L'application APPB étant stockée à la suite de l'application APPA, la décompression de l'application APPA est réalisée de « bas en haut », c'est-à-dire que les tronçons sont décompressés par ordre décroissant de leurs adresses de stockage. Cet ordre de décompression assure, dans l'exemple de la figure 6 ainsi que dans l'exemple à gauche de la figure 5, qu'il n'y ait aucune altération des tronçons compressés restants de l'application APPA lors de la décompression d'un desdits tronçons.

La taille de l'application APPA après décompression est connue et une indication de cette taille est par exemple stockée dans la mémoire 106. Le taux de décompression est, par exemple, tel que chaque tronçon, après décompression, occupera trois adresses mémoire. Autrement dit, après décompression, l'application APPA occupera les adresses ADD0 à ADD11. Les adresses ADD12 et ADD13 resteront occupées par le dernier tronçon B2 de l'application APP2 compressée. Cette application ne sera plus exécutable et il conviendra ou non, selon le mode de réalisation choisi, d'écraser le tronçon B2.

Le premier tronçon de l'application APPA qui va être décompressé est le tronçon A3, qui occupe les adresses ADD6 et ADD7. Le tronçon A3 est décompressé dans les trois dernières adresses qu'occupera l'application APPA décompressée, c'est à dire, dans cet exemple, dans les adresses ADD9, ADD10 et ADD11 qui sont occupées par le tronçon B1 et par une partie du tronçon B0. Le tronçon A3 décompressé est noté A3' et il occupe les adresses mémoire ADD9, ADD10 et ADD11. Selon un mode de réalisation, le tronçon A3 n'est pas écrasé et occupe toujours les adresses ADD6 et ADD7. Une fois cette opération effectuée, on décompresse le tronçon précédent, dans l'ordre des adresses, c'est-à-dire le tronçon A2. Le tronçon A2 est décompressé en un tronçon A2' qui occupe les adresses voisines précédentes du tronçon A3', c'est-à-dire les adresses mémoire ADD6, ADD7 et ADD8 qui étaient occupées par la partie restante du tronçon B0 et par la totalité du tronçon A3. On agit ainsi rétrospectivement jusqu'à la décompression du tronçon A0 en le tronçon A0' qui occupe les adresses mémoire consécutives ADD0, ADD1 et ADD2. L'application APPA ainsi décompressée occupe les adresses ADD0 à ADD11 et est composée des quatre tronçons A0', A1', A2' et A3' occupant chacun trois adresses mémoire.

Selon d'autres modes de réalisation, il est possible de décompresser les applications différemment de l'exemple illustré par la figure 6. Par exemple, l'application APPA pourrait être décompressée de sorte qu'après décompression elle occupe les adresses ADD2 à ADD13. Les adresses ADD0 et ADD1 resteraient alors occupées par le tronçon A1 compressé.

L'ordre dans lequel sont décompressés les tronçons de l'application sélectionnée dépend de l'emplacement des adresses auxquelles l'application décompressée sera stockée. Comme illustré à droite de la figure 5, si les adresses auxquelles la décompression est exécutée précèdent les adresses de l'application compressée, l'application est par exemple décompressée de « bas en haut ». Dans le cas où les adresses auxquelles la décompression est effectuée succèdent aux adresses de l'application compressée, comme illustré à gauche de la figure 5 ainsi que par la figure 6, l'application est par exemple décompressée de « haut en bas ».

La figure 7 représente de manière schématique un système comprenant le circuit intégré 101 et un dispositif de sélection (CONFIG DEV) 700 utilisé lors de l'opération de décompression. Lors d'une étape de personnalisation du dispositif 100, et par exemple en dehors de l'environnement sécurisé de la figure 3, le dispositif de sélection 700 transmet au dispositif 100 une commande de décompression indiquant les applications à décompresser. Par exemple, la commande sélectionne pour décompression un sous-ensemble parmi une pluralité de sous-ensembles d'applications. Cette transmission de commande est effectuée par le biais de l'interface d'entrée/sortie (I/O INTERFACE) 102. La commande de décompression est ensuite communiquée, par le bus 108, au processeur (CPU) 103 pour traitement.

En variante, on peut prévoir une décompression implicite (par opposition à la décompression explicite décrite au paragraphe précédent) lorsqu'on accède à une application pour la première fois.

La mémoire non volatile 106 contient des applications APP1' à APPN' compressées stockées dans l'espace 200. La décompression des applications concernées est par exemple exécutée par le processeur (CPU) 103 et peut, selon un mode de réalisation, être exécutée par tronçon ou, dans un autre mode de réalisation, être exécutée en utilisant la mémoire 104 (RAM).

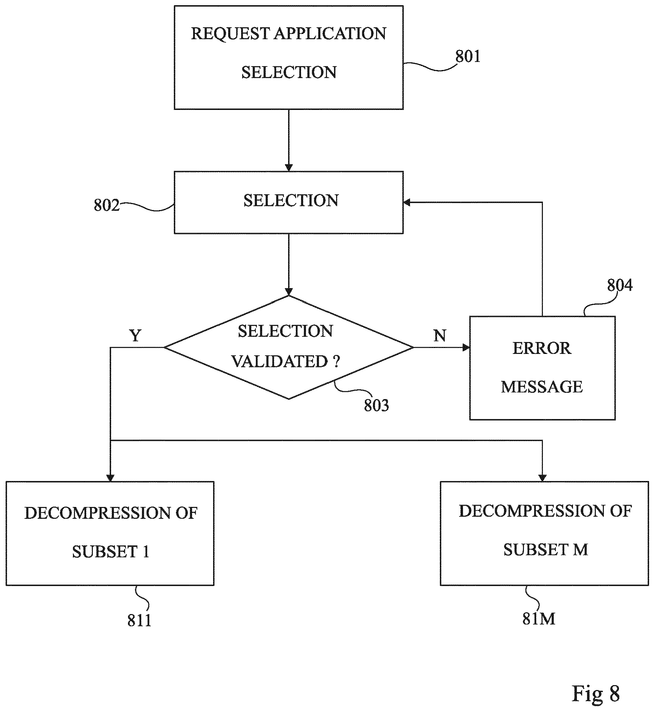

La figure 8 est un organigramme représentant les étapes du procédé de décompression selon un exemple de réalisation de la présente description. Ce procédé est réalisé par exemple par le système de la figure 7, une fois qu'une interface de communication est établie entre le circuit intégré 101 et le dispositif de sélection 700.

Dans une opération 801 (REQUEST APPLICATION SELECTION), le dispositif de sélection 700 invite un utilisateur à effectuer une sélection d'applications à décompresser. Cette invitation est par exemple communiquée par l'ouverture d'une boîte de dialogue sur un affichage du dispositif de sélection 700, ou sur un écran branché au dispositif de sélection 700. On peut également prévoir une exécution automatique par le biais d'une requête provenant d'un serveur externe, sans interaction avec une interface utilisateur. Dans certains modes de réalisation, l'opération 801 peut être omise.

Dans une opération 802 (SELECTION), une commande de sélection des applications à décompresser est transmise du dispositif de sélection vers le circuit intégré 101. Par exemple, la commande est générée sur la base d'une sélection effectuée par l'utilisateur. Dans l'exemple illustré par la figure 8, la sélection est effectuée parmi M sous-ensembles d'applications. Par exemple, la sélection d'un sous ensemble 1 est effectuée pour un usage monétique du dispositif 100 tandis que la sélection d'un sous ensemble 2 est effectuée pour un usage téléphonique, etc.

Dans une opération 803 (SELECTION VALIDATED ?), le dispositif 700 vérifie que la sélection effectuée dans l'opération 802 est valide. Par exemple, la sélection peut ne pas être valide si la somme des tailles des applications sélectionnées après décompression est supérieure à la taille wA de l'espace 200. Dans le cas où la sélection n'est pas valide (N), dans une opération 804 (ERROR MESSAGE), le dispositif 700 le notifie à l'utilisateur par un message d'erreur, par exemple en ouvrant une fenêtre, et le procédé reprend par l'opération de sélection 802 (SELECTION).

Dans le cas où la sélection effectuée dans l'opération 802 est validée par l'opération 803 (Y), le sous-ensemble d'applications sélectionnées est décompressé. Par exemple, si le sous-ensemble 1 a été sélectionné, les applications correspondantes sont décompressées dans une opération 811 (DECOMPRESSION OF SUBSET 1). Si c'est le sous-ensemble M qui a été sélectionné, les applications correspondantes sont décompressées dans une opération 81M (DECOMPRESSION OF SUBSET M).

Selon un mode de réalisation, les sous-ensembles d'applications destinés à un usage final précis du dispositif 100 sont déjà programmés dans le dispositif 700 et il suffit à l'utilisateur, ou autre moyen de sélection, de sélectionner l'usage qu'il souhaite.

Un avantage des modes de réalisation décrits est qu'ils permettent de stocker un nombre plus important d'applications dans une mémoire d'un dispositif afin d'offrir à un revendeur ou à un utilisateur final du dispositif un choix d'applications selon l'utilisation prévue.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En outre, il apparaîtra clairement à la personne de l'art que l'ordre de décompression des applications peut se faire de différentes façons bien qu'on ait donné des exemples de décompression sur des applications directement voisines.

Enfin, la mise en oeuvre pratique des modes de réalisation et variantes décrits est à la portée de la personne du métier à partir des indications fonctionnelles données ci-dessus.

## Revendications

1. Procédé comprenant :

   - la réception, par un dispositif (100) comprenant un circuit intégré (101), d'une commande de sélection d'une première application parmi une pluralité d'applications compressées stockées dans une mémoire non volatile (106) du dispositif lors de la fabrication du circuit intégré, les applications compressées n'étant pas encore installées dans le circuit intégré (101), mais étant prêtes à y être installées lors d'une opération de personnalisation du dispositif (100), la première application étant stockée dans un premier emplacement de la mémoire non-volatile (106) ; et
   - la décompression par le dispositif (100) de la première application, et le stockage de la première application décompressée dans la mémoire (106) au moins partiellement :

      dans le premier emplacement ; et
      dans un deuxième emplacement de stockage d'une deuxième application compressée parmi la pluralité d'applications, la première application décompressée écrasant au moins une partie de la deuxième application compressée.

2. Procédé selon la revendication 1, dans lequel la première application compressée comprend une pluralité de tronçons stockés à des adresses mémoire consécutives du premier emplacement, et dans lequel la décompression de la première application comprend :

   - la décompression d'un premier tronçon situé au moins partiellement à une adresse voisine de l'emplacement de la deuxième application compressée ;
   - le stockage du premier tronçon décompressé au moins partiellement dans l'emplacement de la deuxième application compressée ;
   - la décompression d'un deuxième tronçon de la première application situé au moins partiellement à l'adresse voisine du premier tronçon compressé de la première application ; et
   - le stockage du deuxième tronçon décompressé de la première application sur au moins une adresse voisine du premier tronçon décompressé.

3. Procédé selon la revendication 1 ou 2, dans lequel la commande de sélection de la première application à décompresser contient des instructions pour la décompression d'un sous-ensemble de la pluralité d'applications, la taille du sous-ensemble d'applications décompressées étant au plus égale à la taille de la mémoire dans laquelle la pluralité d'applications compressées est stockée.

4. Procédé selon la revendication 3, dans lequel les applications du sous-ensemble d'applications sélectionné par la commande de sélection sont décompressées en suivant l'ordre dans lequel elles sont stockées dans la mémoire non volatile (106) du dispositif (100).

5. Procédé selon la revendication 4, dans lequel chaque application compressée du sous-ensemble d'applications sélectionné est stockée au moins partiellement à une adresse voisine d'une application compressée n'appartenant pas au sous-ensemble.

6. Procédé selon l'une quelconque des revendications 3 à 5, comprenant :

   - la réception par le dispositif (100) d'une autre commande de sélection comprenant des instructions pour la décompression d'un autre sous-ensemble de la pluralité d'applications ; et

9

- la génération d'un signal d'alerte par le dispositif, le signal d'alerte indiquant que la décompression de l'autre sous-ensemble n'est pas permise.

7. Procédé selon l'une quelconque des revendications 1 à 6, comprenant, avant la réception de la commande de sélection, le stockage de la pluralité d'applications compressées dans la mémoire non volatile (106) par un dispositif de programmation (300), la commande de sélection étant transmise par un dispositif de sélection (700).

8. Dispositif comprenant :

une mémoire non volatile (106) ; et
un circuit intégré (101) comprenant un dispositif de traitement de données (103) agencé pour :

- réceptionner une commande de sélection d'une première application parmi une pluralité d'applications compressées stockées dans la mémoire non volatile (106) lors de la fabrication du circuit intégré, les applications compressées n'étant pas encore installées dans le circuit intégré (101), mais étant prêtes à y être installées lors d'une opération de personnalisation du dispositif (100), la première application étant stockée dans un premier emplacement ; et
- décompresser la première application, et stocker la première application décompressée dans la mémoire (106) au moins partiellement dans le premier emplacement et dans un deuxième emplacement de stockage d'une deuxième application compressée parmi la pluralité d'applications.

9. Dispositif selon la revendication 8, dans lequel la mémoire non volatile (106) est d'une taille ne permettant pas la décompression de la pluralité d'applications.

10. Carte à circuit intégré comprenant le dispositif selon la revendication 8 ou 9.


**Patentansprüche**

1. Verfahren, das Folgendes aufweist:

- den Empfang, durch ein Gerät (100), das eine integrierte Schaltung (101) aufweist, eines Steuersignals für die Auswahl einer ersten Anwendung aus einer Vielzahl von komprimierten Anwendungen, die in einem nichtflüchtigen Speicher (106) des Geräts während der Herstellung der integrierten Schaltung gespeichert sind, wobei die komprimierten Anwendungen noch nicht in der integrierten Schaltung installiert sind, aber bereit sind, in der integrierten Schaltung während eines Anpassungsvorgangs des Geräts installiert zu werden, wobei die erste Anwendung an einer ersten Stelle des nichtflüchtigen Speichers gespeichert ist; und
- die Dekomprimierung der ersten Anwendung durch das Gerät (100) und die Speicherung der ersten dekomprimierten Anwendung in dem Speicher (106) zumindest teilweise:

an der ersten Stelle; und
an einer zweiten Speicherstelle einer zweiten komprimierten Anwendung aus der Vielzahl von Anwendungen, wobei die ersten dekomprimierten Anwendungen mindestens einen Teil der zweiten komprimierten Anwendung überschreiben.

2. Verfahren nach Anspruch 1, wobei die erste komprimierte Anwendung eine Vielzahl von Abschnitten aufweist, die an aufeinanderfolgenden Speicheradressen der ersten Stelle gespeichert sind, und wobei die Dekomprimierung der ersten Anwendung Folgendes aufweist:

- die Dekomprimierung eines ersten Abschnitts, der sich zumindest teilweise an einer Adresse neben der Stelle der zweiten komprimierten Anwendung befindet;
- die Speicherung des ersten dekomprimierten Abschnitts zumindest teilweise an der Stelle der zweiten komprimierten Anwendung;
- die Dekomprimierung eines zweiten Abschnitts der ersten Anwendung, der sich zumindest teilweise an der Adresse neben dem ersten komprimierten Abschnitt der ersten Anwendung befindet; und
- die Speicherung des zweiten dekomprimierten Abschnitts der ersten Anwendung an mindestens einer Adresse neben dem ersten dekomprimierten Abschnitt.

**3.** Verfahren nach Anspruch 1 oder 2, wobei das Steuersignal für die Auswahl der ersten zu dekomprimierenden Anwendung Anweisungen für die Dekomprimierung einer Teilmenge der Vielzahl von Anwendungen enthält, wobei die Größe der Teilmenge der dekomprimierten Anwendungen höchstens gleich der Größe des Speichers ist, in dem die Vielzahl von komprimierten Anwendungen gespeichert ist.

**4.** Verfahren nach Anspruch 3, bei dem die Anwendungen der Teilmenge von Anwendungen, die durch die Auswahlsteuerung ausgewählt wurden, in der Reihenfolge dekomprimiert werden, in der sie in dem nichtflüchtigen Speicher (106) des Geräts (100) gespeichert sind.

**5.** Verfahren nach Anspruch 4, wobei jede komprimierte Anwendung der ausgewählten Teilmenge von Anwendungen zumindest teilweise an einer Adresse neben einer komprimierten Anwendung gespeichert wird, die nicht zu der Teilmenge gehört.

**6.** Verfahren nach einem der Ansprüche 3 bis 5, das Folgendes aufweist:

- den Empfang eines anderen Auswahlsteuersignals durch das Gerät (100), das Anweisungen für die Dekomprimierung einer anderen Teilmenge der Vielzahl von Anwendungen aufweist; und
- die Erzeugung eines Warnsignals durch das Gerät, wobei das Warnsignal anzeigt, dass die Dekomprimierung der anderen Teilmenge nicht erlaubt ist.

**7.** Verfahren nach einem der Ansprüche 1 bis 6, das vor dem Empfang des Auswahlsteuersignals die Speicherung der Vielzahl von komprimierten Anwendungen in den nichtflüchtigen Speicher (106) durch ein Programmiergerät (300) aufweist, wobei das Auswahlsteuersignal durch ein Auswahlgerät (700) übertragen wird.

**8.** Gerät, das Folgendes aufweist:

einen nichtflüchtigen Speicher (106); und
eine integrierte Schaltung (101), die eine Datenverarbeitungsvorrichtung (103) aufweist, die eingerichtet ist, zum:

- Empfangen eines Steuersignals für die Auswahl einer Anwendung aus einer Vielzahl von komprimierten Anwendungen, die in dem nichtflüchtigen Speicher (106) während der Herstellung der integrierten Schaltung gespeichert sind, wobei die komprimierten Anwendungen noch nicht in der integrierten Schaltung installiert sind, aber bereit sind, während eines Anpassungsvorgangs des Geräts in der integrierten Schaltung installiert zu werden, wobei die erste Anwendung an einer ersten Stelle gespeichert ist; und
- Dekomprimieren der ersten Anwendung und Speichern der ersten dekomprimierten Anwendung in dem Speicher (106) zumindest teilweise an der ersten Stelle und an einer zweiten Stelle zum Speichern einer zweiten komprimierten Anwendung aus der Vielzahl von Anwendungen.

**9.** Vorrichtung nach Anspruch 8, wobei der nichtflüchtige Speicher (106) eine Größe hat, die die Dekomprimierung der Vielzahl von Anwendungen nicht ermöglicht.

**10.** Integrierte Schaltungskarte, die die Vorrichtung nach Anspruch 8 oder 9 aufweist.

**Claims**

**1.** Method comprising:

- the reception, by a device (100) comprising an integrated circuit (101), of a control signal for the selection of a first application from among a plurality of compressed applications stored in a non-volatile memory (106) of the device during the fabrication of the integrated circuit, the compressed applications being not yet installed in the integrated circuit, but being ready to be installed in the integrated circuit during a customization operation of the device, the first application being stored in a first location of the non-volatile memory; and
- the decompression by the device (100) of the first application, and the storage of the first decompressed application into the memory (106) at least partially:

in the first location; and
in a second location of storage of a second compressed application among the plurality of applications, the first decompressed applications overwriting at least a portion of the second compressed application.

2. Method according to claim 1, wherein the first compressed application comprises a plurality of sections stored at consecutive memory addresses of the first location, and wherein the decompression of the first application comprises:

- the decompression of a first section located at least partially at an address next to the location of the second compressed application;
- the storage of the first decompressed section at least partially into the location of the second compressed application;
- the decompression of a second section of the first application located at least partially at the address next to the first compressed section of the first application; and
- the storage of the second decompressed section of the first application on at least one address next to the first decompressed section.

3. Method according to claim 1 or 2, wherein the control signal for the selection of the first application to be decompressed contains instructions for the decompression of a subset of the plurality of applications, the size of the subset of decompressed applications being at most equal to the size of the memory where the plurality of compressed applications is stored.

4. Method according to claim 3, wherein the applications of the subset of applications selected by the selection control are decompressed by following the order in which they are stored into the non-volatile memory (106) of the device (100).

5. Method according to claim 4, wherein each compressed application of the selected subset of applications is at least partially stored at an address next to a compressed application which does not belong to the subset.

6. Method according to any of claims 3 to 5, comprising:

- the reception by the device (100) of another selection control signal comprising instructions for the decompression of another subset of the plurality of applications; and
- the generation of an alert signal by the device, the alert signal indicating that the decompression of the other subset is not allowed.

7. Method according to any of claims 1 to 6, comprising, before the reception of the selection control signal, the storage of the plurality of compressed applications into the non-volatile memory (106) by a programming device (300), the selection control signal being transmitted by a selection device (700).

8. Device comprising:

a non-volatile memory (106); and
an integrated circuit (101) comprising a data processing device (103) arranged to:

- receive a control signal for the selection of an application from among a plurality of compressed applications stored in the non-volatile memory (106) during the fabrication of the integrated circuit, the compressed applications being not yet installed in the integrated circuit, but being ready to be installed in the integrated circuit during a customization operation of the device, the first application being stored in a first location; and
- decompress the first application, and store the first decompressed application into the memory (106) at least partially into the first location and into a second location of storage of a second compressed application among the plurality of applications.

9. Device according to claim 8, wherein the non-volatile memory (106) has a size which does not enable the decompression of the plurality of applications.

10. Integrated circuit card comprising the device according to claim 8 or 9.

100

Fig 1

Fig 2A

Fig 2B

Fig 2C

Fig 3

Fig 4

Fig 5

Fig 6

Fig 7

REQUEST APPLICATION
SELECTION

801

SELECTION

802

SELECTION
VALIDATED ?

803

Y

N

ERROR
MESSAGE

804

DECOMPRESSION OF
SUBSET 1

811

DECOMPRESSION OF
SUBSET M

81M

Fig 8

## RÉFÉRENCES CITÉES DANS LA DESCRIPTION

**Documents brevets cités dans la description**

- US 2017371595 A1